# EUROPÄISCHE PATENTSCHRIFT

(11) **EP 1 559 244 B1**
(45) Veröffentlichungstag und Bekanntmachung des Hinweises auf die Patenterteilung: **17.10.2007**
(21) Anmeldenummer: 03788778.3
(22) Anmeldetag: 05.11.2003
(51) Int. Cl.: H04L 12/28, G06K 19/00

(54) **ELEKTRISCHES HAUSINSTALLATIONSSYSTEM**
ELECTRICAL DOMESTIC INSTALLATION SYSTEM
SYSTEME D'INSTALLATION DOMESTIQUE ELECTRIQUE

(30) Priorität: 07.11.2002 DE 10251804
(43) Veröffentlichungstag der Anmeldung: 03.08.2005
(73) Patentinhaber: Buchner, Albrecht, Tien-Mou, Taipei 111 (TW)
(72) Erfinder: Buchner, Albrecht, Tien-Mou, Taipei 111 (TW)
(74) Vertreter: Patentanwälte
(86) Internationale Anmeldenummer: PCT/DE2003/003684
(87) Internationale Veröffentlichungsnummer: WO 2004/042886

(56) Entgegenhaltungen:
- DE-A- 19 530 596
- US-A1- 2002 066 785

## Beschreibung

Die Erfindung betrifft ein elektrisches Hausinstallationssystem mit einem seriellen Installationsbus zum hausinternen dezentralen Schalten, Steuern, Übertragen und/oder Überwachen von Energie und/oder Information.

Derartige Systeme sind insbesondere zur hausinternen audio- und audiovisuellen Kommunikation und zum Schalten, Steuern und/oder Überwachen üblich. Die üblichen Installationsbussysteme haben den Nachteil, dass zu deren Installation und Konfiguration umfangreiche fachspezifische Kenntnisse des jeweiligen Bussystems benötigt werden. Sie können nur durch speziell geschultes Fachpersonal installiert und computerunterstützt konfiguriert werden. Der Elektronikaufwand besteht aus mehreren elektronischen Schaltkreisen, wobei für die Realisierung der eigentlichen Busfunktionalitäten und die Anwendungsfunktionalitäten getrennte Elektronikschaltkreise erforderlich sind. Die Parametrierung erfolgt über eine spezielle, computergestützte Programmierung, oftmals an einer zentralen Installationsstelle des Bussystems. Beispielsweise ist in einem Schaltschrank des entsprechenden Gebäudes, indem auch elektrische Komponenten, Sicherungen und dergleichen untergebracht sind, die zentrale Anordnung des elektronischen Speichers vorzusehen, der über eine Anwendungsschaltung die entsprechenden Adressen der einzelnen Schaltungskomponenten im gesamten Haushalt ansteuert und programmiert. Bei einer Änderung der Programmierung ist es erforderlich, dass die Programmierung zentral, computergestützt erfolgt. Dieser Aufwand ist erheblich und für den Benutzer nachteilig.

Aus der DE 195 30 596 A ist eine Chipkarten-Steuereinheit für die Gebäudetechnik bekannt. Dort ist ein elektrisches Hausinstallationssystem mit einem seriellen Installationsbus zum hausinternen Schalten, Steuern, Übertragen und/oder Überwachen von Energie und/oder Informationen beschrieben, wobei das System aus einer Vielzahl von modular aufgebauten Einzelmodulen besteht.

Es handelt sich dabei um ein System, welches über eine zentrale Steuereinheit programmiert und eingestellt werden muss. Eine Konfiguration der dezentralen Teilnehmer ist nur über die zentrale Steuereinheit möglich.

Die US 2002/066785 A1 beschreibt eine selbständige konfigurierbare Fernbedienung, die nicht für ein Hausinstallationssystem gattungsgemäßer Art brauchbar ist.

Ausgehend von diesem Stand der Technik liegt der Erfindung die Aufgabe zugrunde, ein elektrisches Hausinstallationssystem gattungsgemäßer Art zu schaffen, welches einfach bedienbar und einfach installierbar sowie einfach konfigurierbar ist.

Zur Lösung dieser Aufgabe schlägt die Erfindung vor, dass das System aus einer Vielzahl modular aufgebauter Einzelmodule besteht, die jeweils ein Logikmodul mit einem anwendungsspezifischen Schaltkreis und einen Speicherträger in Form einer Chipkarte mit einem elektronischen Speicher umfassen, auf der der Parametersatz für das individuelle Einzelmodul gespeichert ist, so dass bei gesteckter Chipkarte das Einzelmodul vollständig konfiguriert ist.

Solche anwendungsspezifischen Schaltkreise werden als ASIC bezeichnet. Der elektronische Speicher der Chipkarte ist ein EEPROM.

Gemäß der Erfindung ist eine dezentrale Anordnung der Einzelmodule ermöglicht, die jeweils einzeln individuell konfiguriert und programmiert werden können, ohne dass der Benutzer Programmierkenntnisse haben muss und ohne dass ein PC eingesetzt werden muss. Die Programmierung erfolgt über die gesteckte Chipkarte, so dass der Benutzer Änderungen des Installationssystems vornehmen kann, indem die Chipkarte aus beispielsweise einem in einem Raum des Gebäudes befindlichen Einzelmodul entnommen und in ein in einem anderen Raum befindliches Modul gesteckt wird, so dass dann die auf der Chipkarte gespeicherten Informationen in den Schaltkreis des Einzelmodules eingelesen und konfiguriert werden. In dem anwendungs-spezifischen Schaltkreis (ASIC) sind sämtliche Grundinformationen gespeichert, wobei diese Grundinformationen individuell über die Chipkarte (EEPROM) ausgelesen und gesteuert werden.

Bevorzugt ist dazu vorgesehen, dass der anwendungsspezifische Schaltkreis die Bussteuerung und die Ein- und Ausgänge für alle gebäudespezifischen Anwendungen umfasst, nämlich für Haussprech- und Telekommunikationsanwendungen, einen Tongenerator, Ausgänge für Alarmmeldungen, Tastaturanschluss, parametrierbare Ausgänge mit Schaltfunktionen wie verschiedene Tastfunktionen, wechselnde Ein- und Ausschaltung, Ein- beziehungsweise Ausschaltung, momentane Einschaltung, Blinken.

Diese Aufzählung ist nicht beschränkend zu verstehen.

Zudem kann vorgesehen sein, dass die Informationen zur Parametrierung des ASIC, zur Adresszuordnung und Schaltbefehlzuordnung des Bussystems auf der Chipkarte gespeichert sind.

Besonders bevorzugt ist vorgesehen, dass jedes Einzelmodul das aus einer elektronischen Bustreiberschaltung oder einer Signalschnittstelle und den Busanschlussklemmen bestehende Interface und das Logikmodul mit dem anwendungsspezifischen Schaltkreis, den Chipkartenhalter und eine universelle Anwendungsschnittstelle für den Anschluss von Applikationsschaltungen umfasst.

Durch die erfindungsgemäße Ausbildung wird eine einfache Bedienbarkeit an dem Applikationselement erreicht, wobei eine kostengünstige Realisierung komplexer Schalt- und Kommunikationsvorgänge möglich ist. Auch ist eine einfache Installation und ein Austausch der Parametrierung von Modulen über die portable Chipkarte in einfacher Weise realisierbar.

Bevorzugte Weiterbildungen der Erfindung sind in den Unteransprüchen angegeben.

Grundlegende Komponente des modularen elektrischen Hausinstallationssystem mit seriellem Installationsbus ist ein anwendungsspezifischer Schaltkreis (ASIC).

Er enthält die gesamte Bussteuerung und die Ein- und Ausgänge für gebäudespezifische Anwendungen. Diese beinhalten beispielsweise eine Haussprech- und Telekommunikationsanlage, Tongeneratoren, Alarmmelder, Tastaturanschluss sowie parametrierbare Ausgänge mit Schaltfunktionen, beispielsweise über Taster oder andere übliche Elemente. Jedes Einzelmodul beinhaltet das aus einer elektronischen Bustreiberschaltung oder einer Signalschnittstelle und den Buskabelanschlussklemmen bestehende Interface, das Logikmodul mit dem anwendungsspezifischem Schaltkreis (ASIC) und dem Chipkartenhalter sowie eine universelle Anwendungs-schnittstelle für den Anschluss der Applikations-schaltungen.

Die Parametrierung des Bussystems und der Applikationen erfolgt mit einem einfachen Handprogrammiergerät. Der gesamte Parametersatz jedes Einzelmoduls wird auf einem als Chipkarte realisierten EEPROM abgespeichert. Mit dem Einstecken der Chipkarte in das jeweilige Modul ist dieses bereits vollständig konfiguriert und funktionsfähig. In weiterer Ausgestaltung der Erfindung können auf der Chipkarte zusätzliche Applikationsdaten und/oder Applikationsprogramme gespeichert werden. Durch die Auswahl einer virtuellen Standleitung kann eine Verbindung zu einem bestimmten Modul hergestellt werden. Das Gesamtmodul ist so dimensioniert, dass es in eine übliche Unterputzinstallationsdose eingesetzt werden kann, wobei der Anschluss von Applikationsschaltungen in einem Abdeckelement vorgesehen ist, welches in seiner Frontseite beispielsweise Tasten, Displays oder sonstige Elemente aufweist, die entweder optisch oder akustisch wahrnehmbar sind oder manuell betätigbar sind. Der modulartige Aufbau ermöglicht eine einfache Montage und Demontage, wobei die einzelnen Bestandteile, die in der Unterputzdose angebracht werden können, miteinander mechanisch und elektrisch steckverbunden sind.

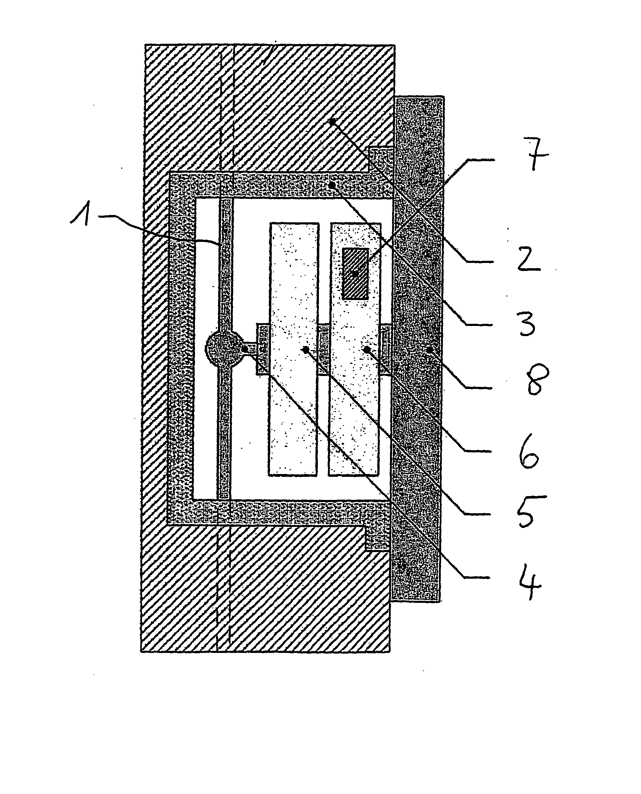

Ein schematisches Ausführungsbeispiel der Erfindung ist in der Zeichnung gezeigt und im Folgenden näher beschrieben.

Die einzige Zeichnungsfigur zeigt ein in einer Unterputzdose angeordnetes Einzelmodul mit seinen Bestandteilen.

In der Zeichnung ist der serielle Installationsbus 1 gezeigt, der durch eine in einer Wand 2 eingesetzte Unterputzdose 3 geführt ist. In die Unterputzdose sind die Einzelkomponenten des Einzelmodules eingesetzt. Mit 4 ist der Anschluss an das Bussystem 1 verdeutlicht. Mit 5 ist das Interface angegeben, welches die elektronische Bustreiberschaltung, eine Signalschnittstelle und Busanschlussklemmen aufweist. Das Interface ist mit dem eigentlichen Busanschluss 4 steckverbunden. Auf das Interface 5 ist ein Logikmodul 6 aufgebracht, welches wiederum mit dem Interface 5 steckverbunden ist. Das Logikmodul 6 umfasst einen Einsteckschacht für eine Chipkarte 7, die die Information zur Parametrierung, zur Adresszuordnung und zur Schaltbefehlzuordnung gespeichert hat. Das Element 8 ist die universelle Anwendungsschnittstelle für den Anschluss von Applikationsschaltungen, wobei auch dieses Element wiederum mit dem darunter befindlichen Logikmodul 6 steckverbunden ist, so dass alle Elemente sowohl mechanisch als auch elektrisch miteinander verbunden sind. In der Stirnfläche des Teiles 8 können entsprechende Schalter sowie optische oder akustische Signalgeber oder Informationsträger, beispielsweise eine Minikamera, integriert sein, so dass diese Elemente leicht ersichtlich und auch leicht zugreiflich sind.

## Patentansprüche

1. Elektrisches Hausinstallationssystem mit einem seriellen Installationsbus (1) zum hausinternen Schalten, Steuern, Übertragen und/oder Überwachen von Energie und/oder Information, das System aus einer Vielzahl modular aufgebauter Einzelmodule bestehend, **dadurch gekennzeichnet, daß** die Einzelmodule dezentral angeordnet sind und jeweils ein Logikmodul (6) mit einem anwendungsspezifischen Schaltkreis und einen Speicherträger in Form einer steckbaren Chipkarte (7) mit einem elektronischen Speicher umfassen, auf der Chipkarte der Parametersatz für das individuelle Einzelmodul gespeichert ist, so dass bei gesteckter Chipkarte (7) das jeweilige dezentral angeordnete Einzelmodul vollständig konfiguriert ist.

2. Hausinstallationssystem nach Anspruch 1, **dadurch gekennzeichnet, dass** der anwendungsspezifische Schaltkreis (ASIC) die Bussteuerung und die Ein- und Ausgänge für alle gebäudespezifischen Anwendungen umfasst, nämlich für Haussprech- und Telekommunikationsanwendungen, einen Tongenerator, Ausgänge für Alarmmeldungen, Tastaturanschluss, parametrierbare Ausgänge mit Schaltfunktionen sowie verschiedene Tastfunktionen, wechselnde Ein- und Ausschaltung, Ein- beziehungsweise Ausschaltung, momentane Einschaltung, Blinken und Löschen von Funktionen.

3. Hausinstallationssystem nach Anspruch 1 oder 2, **dadurch gekennzeichnet, dass** die Informationen zur Parametrierung des anwendungsspezifischen Schaltkreises, zur Adresszuordnung und Schaltbefehlzuordnung des Bussystems auf dem vorzugsweise in Form einer Chipkarte mit einem durch ein EEPROM realisierten Speicherträger gespeichert sind.

4. Hausinstallationssystem nach einem der Ansprüche 1 bis 3, **dadurch gekennzeichnet, dass** jedes Einzelmodul das aus einer elektronischen Bustreiberschaltung oder einer Signalschnittstelle und den Busanschlussklemmen bestehende Interface (5) und das Logikmodul (6) mit dem anwendungsspezifischen Schaltkreis, den Chipkartenhalter und eine universelle Anwendungsschnittstelle (8) für den Anschluss von Applikationsschaltungen umfasst.

5. Hausinstallationssystem nach Anspruch 4,
**dadurch gekennzeichnet, dass** jedes Einzelmodul in eine Unterputzdose (3) eingesetzt ist.

6. Hausinstallationssystem nach einem der Ansprüche 1 bis 5, **dadurch gekennzeichnet, dass** jedes Einzelmodul eine Bedien- oder Funktionsplatte aufweist, bei Anordnung in einer Unterputzdose (3) frontseitig an dieser, an der oder auf der einzeln oder in Kombinations-Schalttasten, Sensoren, Empfänger für portable Sensoren oder Ausgabegeräte angeordnet sind, die über eine universelle Anwendungsschnittstelle (8) mit dem Logikmodul (6) verbunden sind.

7. Hausinstallationssystem nach einem der Ansprüche 1 bis 6, **dadurch gekennzeichnet, dass** ein Handprogrammiergerät zum Beschreiben der Chipkarte (7) für die Parametrierung des Bussystems vorgesehen ist, in dem auf einer austauschbaren Speicherkarte, die programmierten Inhalte aller als Chipkarten (7) realisierten elektronischen Speicher und so die Informationen der kompletten gebäudeseitigen Businstallations-Module gespeichert sind.

8. Hausinstallationssystem nach einem der Ansprüche 1 bis 7, **dadurch gekennzeichnet, dass** auf den als Chipkarten (7) realisierten Speicher weitere Applikationsdaten und/oder Applikationsprogramme gespeichert sind.

9. Hausinstallationssystem nach einem der Ansprüche 1 bis 8, **dadurch gekennzeichnet, dass** die Einzelmodule informationell in Gruppen organisiert sind, so dass einzelne Module, Gruppen von Modulen oder alle Module mit einem Signal aktivierbar sind.

10. Hausinstallationssystem nach einem der Ansprüche 1 bis 9, **dadurch gekennzeichnet, dass** virtuelle Standleitungen zwischen Einzelmodulen geschaltet sind, über die zusätzliche Schaltfunktionen und Verbindungskanäle oder Kommunikationsleitungen aktivierbar sind.

11. Hausinstallationssystem nach einem der Ansprüche 1 bis 10, **dadurch gekennzeichnet, dass** die Datenübertragung anstelle oder zusätzlich zur Busleitung (1) über Funk oder Infrarotstrahlung mittels Sender und Empfänger, über optische Überträger, oder über Stromversorgungsleitungen, erfolgt.

12. Hausinstallationssystem nach einem der Ansprüche 1 bis 11, **dadurch gekennzeichnet, dass** jedes Einzelmodul aus aufeinander angeordneten plattenförmigen Einzelteilen, in Form von bestückten Leiterplatten, aufgebaut ist, nämlich einem Interface (5) mit elektronischer Bustreiberschaltung, Signalschnittstelle und Buskabelanschlusskontakten, einem Logikmodul (6) mit dem anwendungsspezifischen Schaltkreis und Chipkartenhalter und einer Anwendungsplattform (8) für Anwendungsteile wie Schalter oder dergleichen, wobei die Einzelteile miteinander steckverbunden sind und die Steckverbindung sowohl die mechanische als auch die elektrische Verbindung der Einzelteile bewirkt.

## Claims

1. An electrical domestic installation system having a serial installation bus (1) for the in-house switching, control, transfer and/or monitoring of energy and/or information, the system consisting of a plurality of individual modules with a modular design,
**characterised in that** the individual modules are disposed in decentralised manner and in each case comprise a logic module (1) with an application-specific integrated circuit and a memory substrate in the form of a plug-in chip card (7) with an electronic memory, on the chip card the set of parameters for the individual module is stored so that, when the chip card (7) is plugged in, the individual module, which in each case is disposed in decentralised manner, is completely configured.

2. A domestic installation system according to Claim 1,
**characterised in that** the application-specific integrated circuit (ASIC) comprises the bus control and the inputs and outputs for all building-specific applications, namely for in-house phone and telecommunication applications, a sound generator, outputs for alarm signals, keypad connection, outputs with switching functions for which parameters can be set and various key functions, alternating connection and disconnection, connection and disconnection respectively, instantaneous start-up, flashing and cancelling of functions.

3. A domestic installation system according to one of Claims 1 to 3,
**characterised in that** the information for setting the parameters of the application-specific integrated circuit, for address allocation and switching command allocation of the bus system are stored on the memory substrate, preferably designed in the form of a chip card by an EEPROM.

4. A domestic installation system according to one of Claims 1 to 3,
**characterised in that** each individual module comprises the interface (5) consisting of an electronic bus driver circuit or a signal interface and the bus terminals, and the logic module (6) with the application-specific integrated circuit comprises the chip card holder and a universal application interface (8) for the connection of application circuits.

5. A domestic installation system according to Claim 4,
**characterised in that** each individual module is inserted into a concealed socket (3).

6. A domestic installation system according to one of Claims 1 to 5,
**characterised in that** each individual module comprises a control or functional plate, when it is arranged on the front of a concealed socket (3), at which or on which - individually or in combination - keys, sensors, receivers for portable sensors or output units are provided, which are connected via a universal application interface (8) to the logic module (6).

7. A domestic installation system according to one of Claims 1 to 6,
**characterised in that** a hand-held programming device is provided for writing the chip card (7) to set the parameters for the bus system, in which the programmed content of all electronic memories designed as chip cards (7) and thus the information of the complete building-mounted bus installation module are stored on an exchangeable memory card.

8. A domestic installation system according to one of Claims 1 to 7,
**characterised in that** further application data and/or application programmes are stored on memories designed as chip cards (7).

9. A domestic installation system according to one of Claims 1 to 8,
**characterised in that** the individual modules are organised according to information into groups, so that individual modules, groups of modules or all modules can be activated by a signal.

10. A domestic installation system according to one of Claims 1 to 9,
**characterised in that** virtual dedicated lines are connected between individual modules, via which the additional switching functions and connecting channels or communication lines can be activated.

11. A domestic installation system according to one of Claims 1 to 10,
**characterised in that** data transmission takes place instead of or in addition to the bus line (1) wirelessly or by infrared radiation by means of transmitters and receivers, via optical transmitters, or via power lines.

12. A domestic installation system according to one of Claims 1 to 11,
**characterised in that** each individual module is constructed from plate-shaped individual parts placed one on top of the other, in the form of assembled printed circuit boards, namely an interface (5) with an electronic bus driver circuit, signal interface and bus cable connecting contacts, a logic module (6) with the application-specific integrated circuit and chip card holder and an application platform (8) for application parts such as switches and the like, whereby the individual parts are plugged together and the plug-in connection brings about the mechanical and the electrical connection of the individual parts.

## Revendications

1. Système d'installation domestique électrique comprenant un bus d'installation série (1) pour la commutation, la commande, la transmission et/ou la surveillance d'énergie et/ou d'information à l'intérieur de la maison, le système se composant d'une pluralité de modules individuels de structure modulaire, **caractérisé en ce que** les modules individuels sont décentralisés et comprennent chacun un module logique (6) avec un circuit à application spécifique et un support de mémoire sous la forme d'une carte à puce (7) enfichable avec une mémoire électronique, sur laquelle carte à puce est mémorisé le jeu de paramètres pour le module individuel, de sorte que quand la carte à puce (7) est enfichée, le module individuel décentralisé concerné soit entièrement configuré.

2. Système d'installation domestique selon la revendication 1, **caractérisé en ce que** le circuit à application spécifique (ASIC) comprend la commande de bus et les entrées et sorties pour toutes les applications spécifiques au bâtiment, à savoir pour les applications d'interphonie et de télécommunication, un générateur de tonalité, des sorties pour des messages d'alarme, un port clavier, des sorties paramétrables avec fonctions de commutation ainsi que différentes fonctions de touche, activation et désactivation alternantes, activation ou désactivation, activation momentanée, clignotement et extinction de fonctions.

3. Système d'installation domestique selon la revendication 1 ou 2, **caractérisé en ce que** les informations pour le paramétrage du circuit à application spécifique, pour l'assignation des adresses et l'assignation des instructions de commutation du système de bus sont mémorisées de préférence sur un support de mémoire réalisé sous la forme d'une carte à puce avec une EEPROM.

4. Système d'installation domestique selon l'une des revendications 1 à 3, **caractérisé en ce que** chaque module individuel comprend l'interface (5), composée d'un circuit d'attaque de bus électronique ou d'une interface de signaux et des bornes de connexion de bus, et le module logique (6) avec le circuit à application spécifique, le support de carte à puce et une interface d'application universelle (8) pour la connexion de circuits d'application.

5. Système d'installation domestique selon la revendication 4, **caractérisé en ce que** chaque module individuel est intégré dans une boîte encastrée (3).

6. Système d'installation domestique selon l'une des revendications 1 à 5, **caractérisé en ce que** chaque module individuel présente une plaque de commande ou de fonction, en cas de disposition dans une boîte encastrée (3) en façade de celle-ci, au niveau de laquelle ou sur laquelle sont disposés des touches de commutation individuelles ou combinées, des capteurs, des récepteurs pour capteurs portables ou des appareils de sortie qui sont reliés au module logique (6) par une interface d'application universelle (8).

7. Système d'installation domestique selon l'une des revendications 1 à 6, **caractérisé en ce qu'**il est prévu un appareil de programmation manuelle pour l'écriture de la carte à puce (7) pour le paramétrage du système de bus, dans lequel, sur une carte mémoire échangeable, de préférence une carte mémoire flash, sont mémorisés les contenus programmés de toutes les EEPROM réalisées sous forme de cartes à puce (7) et donc les informations des modules de l'installation de bus complète côté bâtiment.

8. Système d'installation domestique selon l'une des revendications 1 à 7, **caractérisé en ce que** d'autres données d'application et/ou programmes d'application sont mémorisés sur les EEPROM réalisés sous forme de cartes à puce (7).

9. Système d'installation domestique selon l'une des revendications 1 à 8, **caractérisé en ce que** les modules individuels sont organisés du point de vue informationnel en groupes de façon que quelques modules, groupes de modules ou tous les modules puissent être activés par un signal (instruction), par exemple pour des fonctions d'alarme.

10. Système d'installation domestique selon l'une des revendications 1 à 9, **caractérisé en ce que** des lignes directes virtuelles sont branchées entre des modules individuels, via lesquelles des fonctions de commutation supplémentaires et des canaux de liaison ou des lignes de communication sont activables.

11. Système d'installation domestique selon l'une des revendications 1 à 10, **caractérisé en ce que**, à la place ou en plus de la ligne de bus (1), la transmission de données a lieu via radio ou rayonnement infrarouge au moyen d'émetteurs et de récepteurs, via des transmetteurs optiques, ou via des lignes d'alimentation électrique.

12. Système d'installation domestique selon l'une des revendications 1 à 11, **caractérisé en ce que** chaque module individuel est constitué d'éléments en forme de plaque superposés, en particulier sous la forme de cartes à circuit imprimé équipées, à savoir d'une interface (5) avec circuit d'attaque de bus électronique, interface de signaux et contacts de connexion de câble de bus, d'un module logique (6) avec le circuit à application spécifique (ASIC) et support de carte à puce et d'une plateforme d'application (8) pour des pièces d'application comme des commutateurs ou analogues, les éléments étant de préférence reliés entre eux par enfichage et la liaison par enfichage produisant aussi bien la liaison mécanique que la liaison électrique des éléments.
